# EUROPEAN PATENT APPLICATION

(11) **EP 0 728 433 A1**
(43) Date of publication of application: **28.08.1996**
(21) Application number: 95307242.8
(22) Date of filing: 12.10.1995
(51) Int. Cl.: A47J 39/02

(54) **Food warmer**

(30) Priority: 27.02.1995 US 395116
(71) Applicant: PRINCE CASTLE INC., Carol Stream, Illinois 60188 (US)
(72) Inventor: Robards, Chester F., Jr., Roselle, Illinois 60172 (US)
(74) Representative: Allden, Thomas Stanley

(57) **Abstract**

A pass thru food warming apparatus is disclosed with a housing defining open rear and front ends between which food products can be passed. A generally horizontal grate extends between the open rear and front ends of the housing and on which the food products can be supported. A heating platform is mounted beneath the grate for warming the food products supported by the grate. The heating platform includes a generally horizontal top plate, a radiant heating device immediately beneath the top plate for heating the top plate, and a generally horizontal bottom plate spaced beneath the heating device to define an insulating chamber therebetween. A generally hollow insulating chamber also is provided along either one or both of the front and rear edges of the heating platform.

## Description

### Field of the Invention

This invention generally relates to the art of food preparation and, particularly, to a pass thru food warming apparatus.

### Background of the Invention

Various types of ovens or food warming apparatus are used in a wide variety of applications, particularly in the food preparation and distribution fields. Such apparatus may range from a completely closed oven to pass thru devices which may have one or more open ends. For instance, in high volume restaurants or similar establishments, it is common to separate the cooking or kitchen area from the ordering/serving area by a divider or partition area through which the cooked food is passed from the cooking area to the serving area. It also is common to have one or more food warming apparatus in the partition area and through which the cooked food is placed for serving seriatim to customers. The apparatus most often is an enclosed structure which has an open rear end into which the cooked food is placed and an open front end from which the food is taken in a first-in/first-out manner for serving to the customers.

One of the problems with pass thru food warming apparatus of the character described above is that both cooking and serving personnel having a tendency to burn themselves, particularly their hands and fingers, when using the apparatus. In other words, the personnel must extend their hands into the enclosed warming apparatus when placing food items thereinto or taking food items therefrom. In high volume food establishments, speed always is a consideration, and this only increases the tendency of the personnel having their hands come into contact with heating surfaces within the pass thru apparatus.

This invention is directed to solving such problems by providing a compact, efficient and safe pass thru food warming apparatus which does not expose or present any hot heating surfaces for contact by users of the apparatus.

### Summary of the Invention

An object, therefore, of the invention is to provide a new and improved pass thru food warming apparatus of the character described.

In the exemplary embodiment of the invention, the apparatus includes a housing defining open rear and front ends between which food products can be passed. A generally horizontal grate extends between the front and rear ends of the housing and on which the food products can be supported. A heating platform is provided beneath the grate for warming the food products supported by the grate with radiant heat. Actually, the heating platform is not intended to increase the temperature of the food products. The apparatus is intended primarily for use in holding the food products at a controlled temperature (i.e. the temperature that exists in a food product after it has been cooked/heated and placed in the apparatus). The terms "warmer", "warming", and the like, are used herein and in the claims hereof in that context.

In particular, the heating platform includes a generally horizontal top plate, a heating device immediately beneath the top plate for heating the top plate, and a generally horizontal bottom plate spaced beneath the heating device to define an insulating chamber therebetween. Preferably, the grate is spaced above the top plate of the heating platform. Therefore, a user of the apparatus cannot touch the top plate from above because of the position of the grate, and the bottom plate of the heating platform is isolated from the heating device because of the insulating chamber between the bottom plate and the top plate.

As disclosed herein, the top and bottom plates of the heating platform are fabricated of sheet metal material. The heating device is provided by a generally planar heating grid juxtaposed against the underside of the top plate, and a reflective plate is juxtaposed immediately beneath the planar heating grid. The heating grid is a resistance heater foil of a given pattern within a dielectric planar substrate.

Other features of the invention include providing the housing with wall means about the grate and the heating platform, with the wall means being of a dual-wall construction to define insulating chamber means therebetween. The inside of the wall means are reflective. A generally hollow insulating chamber is defined along one or both of the front and/or rear edges of the heating platform.

In the preferred embodiment of the invention disclosed herein, the grate and the heating platform are located generally intermediate a top and bottom of the housing. The bottom of the housing defines a second heating platform, and a second grate is provided above the second heating platform to provide two tiers of food products supported between the front and rear ends of the housing.

Other objects, features and advantages of the invention will be apparent from the following detailed description taken in connection with the accompanying drawings.

### Brief Description of the Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIGURE 1 is a perspective view of a pass thru food warming apparatus embodying the concepts of the invention;
FIGURE 2 is a fragmented vertical section, on an enlarged scale, taken generally along line 2-2 of Figure 1; and
FIGURE 3 is an exploded perspective view of the heating platform of the apparatus.

### Detailed Description of the Preferred Embodiment

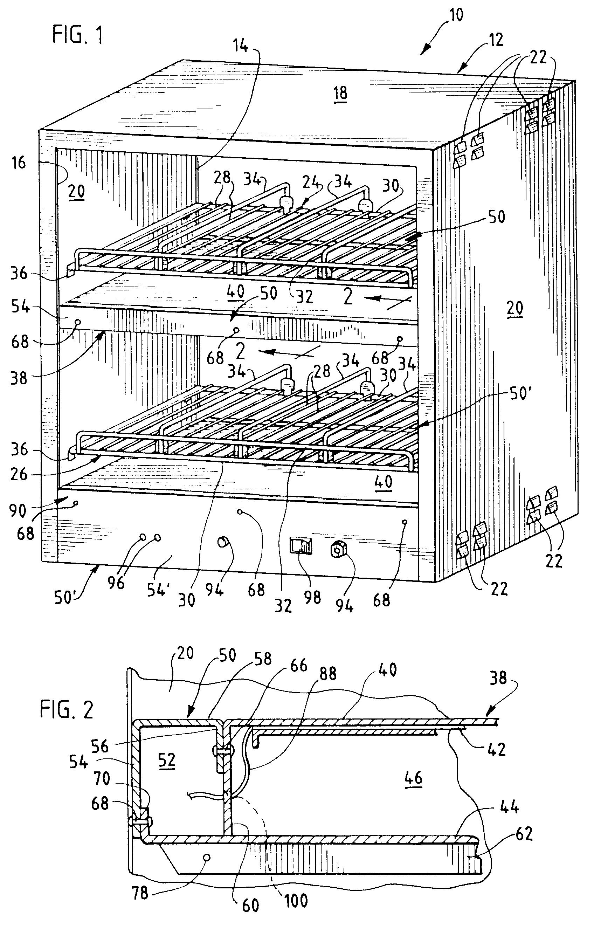

Referring to the drawings in greater detail, and first to Figure 1, the invention is embodied in a food warming apparatus, generally designated 10, which includes a housing, generally designated 12, defining an open rear end 14 and an open front end 16 between which food products can be passed. For instance, as described in the "Background", above, pass thru food warming apparatus 10 may be employed in a divider or partition area of a high volume restaurant or other establishment, separating a rear cooking or kitchen area from a front ordering or service area. Cooking personnel would place cooked food products into the apparatus through open rear end 14, and serving personnel would take the food products from the apparatus through open front end 16. The food products, thereby, pass from the cooking area to the serving area seriatim in a first-in/first-out manner.

Housing 12 further includes a top wall 18 and a pair of side walls 20 which, as viewed in Figure 1, are of a substantial thickness. In the preferred embodiment, the entire housing is fabricated of sheet metal material and top wall 18 and side walls 20 are of a dual-wall construction to define insulating chambers within the top and side walls. Vents 22 are stamped and formed out of side walls 20 to allow circulation through the chambers and the escape of warm air from therewithin. Lastly, while the outsides of housing 12 (i.e. top wall 18 and side wall 20) may have a brushed appearance for aesthetic purposes, preferably the insides of the top and side walls have high reflective surfaces to enhance the efficiency of the warming apparatus, as will be understood hereinafter.

An upper grate, generally designated 24, and a lower grate, generally designated 26, are generally horizontal and extend between front and rear open ends 16 and 14, respectively, of the housing. Each grate is of similar or identical construction and includes a plurality of front-to-rear bars 28 fixed between a pair of front and rear cross bars 30. A front rail bar 32 prevents food products from being pushed off of the front ends of the grates when the grates are "loaded" at their rear ends. Divider bars 34 extend front-to-rear and divide the grate into transverse "chutes" so that different types of food products, such as different types of sandwiches, can be arranged in sort of horizontal columns for passing seriatim through the warming apparatus. Lastly, mounting tabs 36 depend from opposite sides of each grate and through which appropriate fasteners, such as screws, bolts or rivets can pass to secure the grates within housing 12 spanning side walls 20 and extending between the open front and rear ends of the housing.

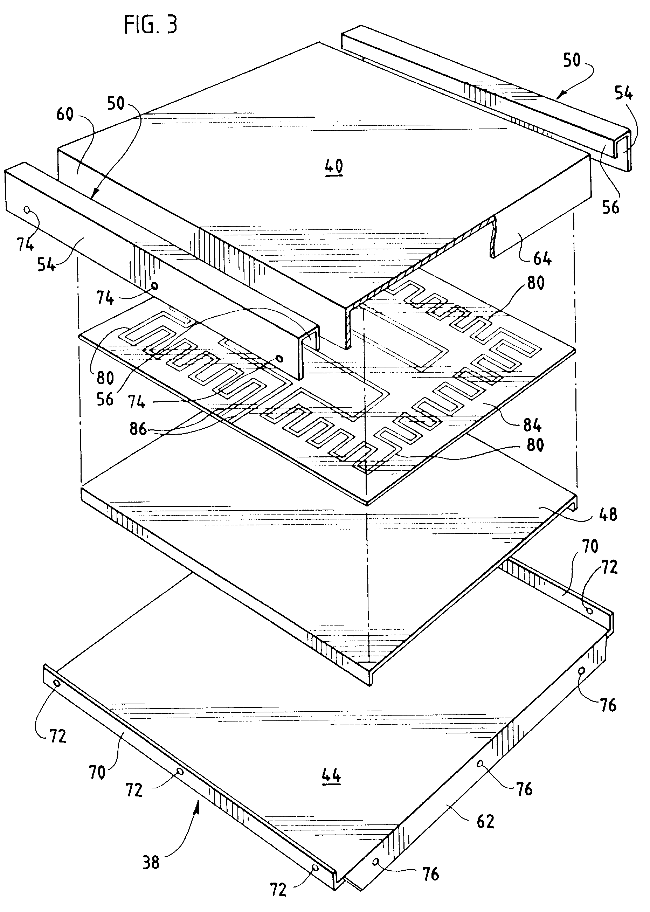

A heating platform, generally designated 38, is mounted within the housing and extends between the open front and rear ends thereof, spanning side walls 20 and spaced beneath top grate 24. Referring to Figures 2 and 3 in conjunction with Figure 1, heating platform 38 includes a generally horizontal top plate 40, a generally planar heating device 42 immediately beneath the top plate for heating the top plate, and a generally horizontal bottom plate 44 spaced beneath the heating device to define an insulating chamber 46 (Fig. 2) therebetween. A reflector plate 48 is located immediately beneath planar heating device 42 whereby the heating device is sandwiched between top plate 40 and reflector plate 48. The reflector plate has a highly reflective surface on one or both sides thereof to radiate the heat from heating device 42 upward and to facilitate maintaining insulating chamber 46 as cool as possible.

An elongated spacer channel 50 is located along both the front and rear edges of heating platform 38 to define an insulating chamber 52 (Fig. 2) therewithin. Each spacer channel has an inverted, generally U-shaped cross-section as seen clearing in Figure 2. This configuration defines an outer downwardly depending leg 54, an inner downwardly depending leg 56 and a bight portion 58 joining the legs. Outer leg 54 is longer than inner leg 56 as seen in Figure 2. For assembly purposes described below, top plate 40 has front and rear flanges 60 depending therefrom, and bottom plate 44 has downwardly depending flanges 62 at the sides thereof. As seen in Figure 3, top plate 40 also has downwardly depending flanges 64 at the sides thereof.

In assembly of heating platform 38, front and rear spacer channels 50 are assembled to top plate 40 by means of fasteners 66 (Fig. 2), such as bolts, rivets, sheet metal screws and the like, secured between inner legs 56 of the spacer channels and front and rear flanges 60 of the top plate. Either before or after assembling the spacer channels to the top plate, planar heating device 42 is mounted on the underside of top plate 40 in the position shown in Figure 2. This is accomplished by assembling reflector plate 48 to top plate 40 by appropriate fasteners (not shown), such as screws, bolts or rivets, about the periphery of the reflector plate and the planar heating device.

This subassembly of top plate 40, heating device 42, reflector plate 48 and spacer channels 50 then are assembled to bottom plate 44 by means of appropriate fasteners 68, such as bolts, rivets, screws and the like, secured between outer legs 54 of spacer channels 50 and upturned flanges 70 along the front and rear edges of bottom plate 44. Holes 72 in flanges 70 and holes 74 in legs 54 are shown in Figure 3 for accepting fasteners 68. Flanges 62 depending along the side edges of bottom plate 44 include holes 76 (Fig. 3) for receiving appropriate fasteners 78 (Fig. 2), such as bolts, rivets, screws and the like, for securing bottom plate 44 and, thereby, the entire heating platform assembly 38, to the inside of side walls 20 of housing 12 as seen in Figures 1 and 2. Alternatively, bottom plate 44 can be secured between the side walls, and the subassembly of top plate 44, heating device 42, reflector plate 48 and spacer channels 50 can be assembled to the bottom plate after it is assembled between the housing side walls.

Referring to Figure 3, planar heating device 42 is a foil resistance heater having a pattern of conductive foil 80 embedded in a dielectric planar substrate 84 such as of MICA material. In actual manufacture, the resistance foil pattern is sandwiched between two sheets of the dielectric planar substrate. Terminal ends 86 of the resistance foil 80 are electrically coupled to the conductors of an electrical wire 88 shown in Figure 2. The heating gradient over top plate 40 is determined by the particular resistance foil pattern 80. For instance, in order to provide a uniform heating environment within warming apparatus 10, and with the apparatus being subjected to air currents about the periphery thereof, particularly at the open ends thereof, the pattern of the resistance foil preferably is more concentrated about the periphery of planar heating device 42 as is clearly shown in Figure 3.

Referring back to Figure 2, in an actual heating condition of heating platform 38, the surrounding environment about heated top plate 40 has been tested. For instance, it has been found that, with top plate 40 heated by heating device 42 to a temperature of 235°F, insulating chamber 46 is on the order of 160°F, while bottom plate 44 is on the order of only 150°F. At the front and rear edges of the heating platform, again with top plate 40 being at 235°F, insulating chambers 52 within spacer channels 50 were on the order of only 140°F, maintaining outer legs 54 of the channels at 140°F and bight portion 58 near top plate 40 still being at only 160°F. Therefore, it readily can be seen that with the construction of heating plat form 38, top plate 40 can be maintained at a substantial temperature while the front and rear of the heating platform defined by spacer channels 50 and the bottom of the platform defined by bottom plate 44 are maintained at relatively cool temperatures, and these are the surfaces which a user's hands will most likely come into contact when using the apparatus. Of course, the top of heated top plate 40 cannot be touched by the user because of the position of grate 24.

Referring back to Figure 1, a second heating platform 90 is located below grate 26. This heating platform is substantially identical to heating platform 38 and will not be described in further detail, except to note that lower heating platform 90 has a front elongated spacer channel, generally designated 50', which has an outer leg 54' that is considerably longer than outer leg 54 of spacer channel 50 of the upper heating platform 38. Otherwise, heating platform 90 includes a top platform 40 which is visible in Figure 1, along with another planar heating device 42 and plate 40 which are not visible in Figure 1. Outer leg 54' of spacer channel 50' ele vates top heated plate 40 of lower heating platform 90 sufficiently above the bottom of warming apparatus 10 to accommodate various controls therebeneath. For instance, Figure 1 shows outer leg 50' mounting various control elements 94, indicating elements 96 and an on-off switch 98. In addition, electrical wire 88 (Fig. 2) from upper heating device 42 extends through a hole 100 in flange 60 and into insulating chamber 52. The wire then can be fed to one end of spacer channel 50, into the space within one of the dual-walled side walls 20 and back into the interior of lower spacer channel 50' for appropriate electrical connection to the controls behind the lower spacer channel.

It will be understood that the invention may be embodied in other specific forms without departing from the spirit or central characteristics thereof. The present examples and embodiments, therefore, are to be considered in all respects as illustrative and not restrictive, and the invention is not to be limited to the details given herein.

## Claims

1. A pass thru food warming apparatus, comprising:
a housing having at least a top wall and two side walls and defining open rear and front ends between which food products can be passed;
a generally horizontal top grate secured between the side walls of the housing and extending between the open rear and front ends of the housing and on which the food products can be supported;
an upper heating platform beneath the top grate for warming the food products supported by the top grate, the heating platform including a generally horizontal top plate, a heating device immediately beneath the top plate for heating the top plate, and a generally horizontal bottom plate spaced beneath the heating device to define an insulating chamber therebetween;
a generally horizontal bottom grate secured between the side walls of the housing and extending between the open rear and front ends of the housing and on which the food products can be supported, the bottom grate being spaced sufficiently below the upper heating platform to accommodate the food products therebetween; and
a lower heating platform beneath the bottom grate for warming the food products supported by the bottom grate.

2. A food warming apparatus as claimed in claim 1, wherein said top and bottom grates are spaced above the respective top and bottom heating platforms.

3. A food warming apparatus as claimed in claim 1 or claim 2, wherein said housing includes wall means about said grates and said heating platforms, the wall means being a dual-wall construction to define insulating chamber means therewithin.

4. A food warming apparatus as claimed in any of the preceding claims, wherein said heating device of the upper heating platform comprises a generally planar radiant heating grid juxtaposed against the underside of the top plate of the upper heating platform.

5. A food warming apparatus as claimed in claim 4, including a reflector plate immediately beneath the planar heating grid.

6. A food warming apparatus as claimed in claim 4 or claim 5, wherein said planar heating grid comprises a resistance heater foil of a given pattern within a dielectric planar substrate.

7. A food warming apparatus as claimed in any of the preceding claims, including means defining a generally hollow insulating chamber along front edges of said heating platforms.

8. A food warming apparatus as claimed in any of the preceding claims, including means defining a generally hollow insulating chamber along rear edges of the heating platforms.

9. A food warming apparatus as claimed in claim 1 or claim 2, wherein said housing includes wall means about the grate and the heating platform, at least the inside of the wall means being reflective.

10. A food warming apparatus, comprising:
a housing defining an open end providing access to food products therewithin;
a generally horizontal grate within the housing and on which the food products can be supported; and
a heating platform beneath the grate for warming the food products supported by the grate, the heating platform including a generally horizontal top plate, a heating device immediately beneath the top plate for heating the top plate, and a generally horizontal bottom plate spaced beneath the heating device to define an insulating chamber therebetween.

11. A food warming apparatus as claimed in claim 10, wherein said grate is spaced above the top plate of the heating platform.

12. A food warming apparatus as claimed in claim 10 or claim 11, wherein said heating device comprises a generally planar radiant heating grid juxtaposed against the underside of the top plate of the heating platform.

13. A food warming apparatus as claimed in claim 12, including a reflector plate immediately beneath the planar heating grid.

14. A food warming apparatus as claimed in claim 12 or claim 13, wherein said planar heating grid comprises a resistance heater foil of a given pattern within a dielectric planar substrate.

15. A food warming apparatus as claimed in any of the claims 10 to 14, including means defining a generally hollow insulating chamber along a front edge of the heating platform.

16. A food warming apparatus as claimed in any of claims 10 to 15, including a second grate and a second heating platform spaced below said grate and heating platform to provide two tiers of food products supported between the rear and front ends of the housing.

17. A food warming apparatus as claimed in any of claims 10 to 15, wherein said housing includes wall means about the grate and the heating platform, at least the inside of the wall means being reflective.
